# EUROPÄISCHE PATENTSCHRIFT

(11) **EP 1 160 134 B1**
(45) Veröffentlichungstag und Bekanntmachung des Hinweises auf die Patenterteilung: **17.03.2004**
(21) Anmeldenummer: 00110423.1
(22) Anmeldetag: 16.05.2000
(51) Int. Cl.: B60R 21/01, B60R 22/46

(54) **Insassenrückhaltesystem**
Occupant restraint system
Système de retenue de passager

(43) Veröffentlichungstag der Anmeldung: 05.12.2001
(73) Patentinhaber: DaimlerChrysler AG, 70567 Stuttgart (DE)
(72) Erfinder: Bacher, Werner, 71067 Sindelfingen (DE); Rudolf, Harald, 72072 Tübingen (DE); Zerrweck, Frank, 71155 Altdorf (DE)

(56) Entgegenhaltungen:
- EP-A- 0 893 313
- DE-A- 19 520 721
- US-A- 5 413 378
- US-A- 5 667 246

## Beschreibung

Die Erfindung betrifft ein Insassenrückhaltesystem mit einer Begrenzung einer über einen Gurt auf einen Insassen ausgeübten Rückhaltekraft gemäß dem Oberbegriff des Patentanspruchs 1.

Sicherheits-Rückhaltesysteme befinden sich heutzutage auf den meisten Sitzen in Kraftfahrzeugen. Sie dienen dazu, bei einer Verunfallung des Fahrzeuges die Verletzungen der Insassen möglichst gering zu halten. Dabei werden heutzutage unter anderem aktive Systeme, wie insbesondere Sicherheitsgurte und sogenannte Airbags, eingesetzt.

Ein aus der Praxis allgemein bekannter Airbag ist ein bei einem Unfall automatisch aufblasbarer Gassack, der bei Nichtgebrauch in zusammengelegtem Zustand in einem Unterbringungsraum beispielsweise unter der Windschutzscheibe, seitlich im Sitz, in der Türe oder auch im Fußraum des Fahrzeuges angeordnet ist. Von diesem Unterbringungsraum tritt der Gassack bei einem kritischen Fahrzustand durch Aufblasen aus. Dabei wird der Gassack mittels eines sensorgesteuerten Gasgenerators kurzzeitig aufgeblasen, so daß zum Schutz des Insassen ein ballonartiges Schutzkissen gebildet wird.

Daneben werden auch schon seit langer Zeit Sicherheitsgurte in Kraftfahrzeugen zum Schutz der Insassen eingesetzt. Es sind daher auch viele verschiedene Arten solcher Sicherheitsgurte bekannt. So werden beispielsweise viele Fahrzeuge mit im Handel befindlichen Gurten ausgerüstet, die entweder an zwei oder an drei Befestigungspunkten im Fahrzeug angeordnet sind, und die bei einem plötzlichen scharfen Abbremsen oder Aufprallen des Fahrzeuges auf ein Hindernis ein infolge der Trägheitskraft bedingtes Nachvornfliegen der Körper der im Fahrzeug befindlichen Personen verhindern sollen.

Prallt ein Fahrzeug, insbesondere bei hoher Geschwindigkeit, auf ein Hindernis, so werden die Insassen infolge der Trägheitskraft nach vorn geschleudert. Bei Nichtvorhandensein von Sicherheitseinrichtungen enden derartige Unfälle für im Fahrzeug befindliche Personen meist mit schweren, zum Teil tödlichen Verletzungen. Sind die Fahrzeuge dagegen unter anderem mit Sicherheitsgurten ausgerüstet, so bestehen zwar für die Insassen meist Überlebenschancen, jedoch ist für die Insassen die durch den Gurt aufgebrachte Rückhaltekraft unter Umständen sehr hoch.

Ein Verfahren zur Begrenzung der in einem Insassenrückhaltesystem über einen Gurt auf den Insassen ausgeübten Rückhaltekraft wird beispielsweise in der europäischen Patentanmeldung EP 0 734 922 beschrieben. Dabei wird in einem Rückhaltesystem mit Sicherheitsgurt und aufblasbarem Rückhalteelement die durch den Gurt auf den Insassen ausgeübte Rückhaltekraft durch einen Kraftbegrenzer auf ein Niveau begrenzt, das einstellbar ist und an die Körpergröße oder das Gewicht des Fahrzeuginsassen angepaßt werden kann. Die Einstellung des Kraftniveaus erfolgt dabei in solcher Weise, daß in der die Kraft über den Vorverlagerungsweg darstellenden Kennlinie im Bereich einer Wegstrecke, nach deren Durchlaufen der Kontakt zwischen Gurtband und aufgeblasenem Rückhalteelement erwartet wird, die Kennlinie eine abfallende Tendenz aufweist. Der Kraftbegrenzer selbst ist dabei derart gestaltet, daß die Rückhaltekraft durch plastische Materialverformung begrenzt wird und die Stärke der Materialverformung abhängig von Parametern, die für die Körpergröße oder das Gewicht des Insassen repräsentativ sind, veränderlich ist.

Bei dieser Kraftbegrenzung hat es sich jedoch als nachteilig erwiesen, daß die Unfallschwere keinen Einfluß auf die Kraftbegrenzung hat und somit bei allen Arten von Unfällen, unabhängig von deren Schwere, eine Kraftbegrenzung der auf den Insassen ausgeübten Rückhaltekraft stattfindet. Dies ist jedoch nicht immer erwünscht.

Die DE 196 04 483 C1 beschreibt eine Sicherheitseinrichtung für Kraftfahrzeuge, wobei ein mit Meßgebern verbundenes Regelgerät vorgesehen ist zur gesteuerten Beeinflussung der Rückhaltecharakteristik der einen Sicherheitsgurt aufweisenden Sicherheitseinrichtung für den im Fahrzeug befindlichen Insassen im Rahmen des menschlichen Erträglichkeitsbereiches. Diese soll im Hinblick auf eine bestmögliche Rückhaltecharakteristik eingerichtet sein. Hierzu ist es vorgesehen, daß das Regelgerät mit einer Blockiereinrichtung für das Gurtband, welche eine einen begrenzten Gurtbandauszug zulassenden Kraftbegrenzungseinrichtung aufweist derart gekoppelt ist, daß in Abhängigkeit von den vom Regelgerät detektierten Körperdaten des Insassen, den auf die Fahrgastzelle bezogenen Sitzpositionsdaten und/oder den Unfallbedingungsdaten der von der Kraftbegrenzungseinrichtung ausgehende Kraftverlauf und/oder das Maß des zulässigen Gurtbandauszuges bis zu einer vollständigen Blockierung des Gurtauszuges kontrolliert, gesteuert und begrenzt wird.

Bei dieser Sicherheitseinrichtung hat es sich als nachteilig erwiesen, daß der Einfluß von anderen Sicherheitsrückhalteeinrichtungen im Fahrzeug nicht beachtet wird und ferner keinerlei Angaben darüber gemacht werden, inwiefern die Größen Insassenposition, Körperdaten des Insassen und Unfallbedingungsdaten Einfluß auf das Kraftniveau bzw. auf die Kraftbegrenzung haben.

Eine konstruktive Verwirklichung eines Kraftbegrenzers wird in der DE 43 31 027 C2 beschrieben. Bei diesem selbstsperrenden Sicherheitsgurtaufroller mit einer fahrzeugsensitiv und/oder gurtbandsensitiv ansteuerbaren Blockiervorrichtung und mit einer auf die Gurtaufwickelwelle einwirkenden und mit einer An-triebsvorrichtung versehenen Strammvorrichtung, wobei der Gurtaufroller mit einer Kraftbegrenzungseinrichtung für einen begrenzten Gurtbandauszug versehen ist, soll sichergestellt sein, daß die Kraftbegrenzungseinrichtung bei normalem Betrieb des Sicherheitsgurtaufrollers keiner Beanspruchung unterliegt. Hierzu ist vorgesehen, daß die Kraftbegrenzungseinrichtung in Abhängigkeit von den Funktionszuständen des Gurtaufrollers und/oder der Strammvorrichtung über eine zwischengeschaltete Kupplung an- und abschaltbar ist.

Auch bei diesem Gurtkraftbegrenzer sind keine Kriterien für die Art der Begrenzung der Gurtkraft angegeben. Außerdem finden bei diesem Gurtkraftbegrenzer andere Insassenrückhalteeinrichtungen ebenfalls keinen Einfluß auf das ausgeübte Kraftniveau.

Aus der US 5,667,246 ist ein Verfahren und eine Vorrichtung (Oberbegriff von Anspruch 1) zur Reduzierung der Verletzungen von Fahrzeuginsassen bei Frontalzusammenstößen bekannt, welches mit einem Rückhaltesystem arbeitet, das einen Sicherheitsgurt mit einem Zugsystem zum Ausziehen und Zurückziehen des Sicherheitsgurtes und mit einer Vorspannungseinrichtung im Schultergurtbereich aufweist. Zur Begrenzung der Belastung des Insassen durch den Schultergurtbereich ist ein Belastungsbegrenzer vorgesehen, welcher nach Ausübung der Vorspannung auf den Schultergurtbereich aktiviert ist und ein gewisses Maß an Lockerheit des Schultergurtes zuläßt, wenn die Gurtspannung über einer bestimmten Schwelle ist, sowie eine solche Lockerheit des Sicherheitsgurtes unterhalb dieses Schwellwertes verhindert. Ein solcher Gurtkraftbegrenzer ist vorteilhaft bei einer Kombination des Sicherheitsgurtes mit einem Airbag, da hiermit die Belastung des Insassen bei Kontakt mit dem Airbag reduziert werden können.

Wenngleich die US 5,667,246 beschreibt, daß durch den Gurtkraftbegrenzer bei Vorhandensein eines Airbag die Rückhaltekraft des Gurtes reduziert werden kann, da der Airbag ab Kontakt mit dem Insassen einen Teil der Rückhaltewirkung übernimmt, so bleiben nachteilhafterweise wichtige Parameter wie die Vorverlagerung des Fahrzeuginsassen nach der Airbagauslösung, das Gewicht des Fahrzeuginsassen und die Crash-Intensität bei der offenbarten Ausführung unberücksichtigt.

Die US 5,413,378 beschreibt eine Vorrichtung zur Steuerung eines Insassenrückhaltesystems mit Positionssensoren zum Sensieren einer Position eines Insassen, mit Gewichtssensoren zum Sensieren des Gewichts eines Insassen, und mit Steuermitteln, die mit den Positionssensoren, den Gewichtssensoren und Reguliermitteln zum Regulieren einer Insassenrückhaltefunktion der Insassenrückhaltevorrichtung verbunden sind, wobei eine Gurtkraftbegrenzung in Abhängigkeit der Insassenposition und des ermittelten Insassengewichts erfolgt. Des weiteren weist das Insassenrückhaltesystem eine Airbaganordnung auf, dessen Zustand, nämlich aktiviert oder inaktiviert, bei der Auswahl der Gurtkraftbegrenzung berücksichtigt wird. Die Information über den Airbagzustand liefert dabei ein Crash-Sensor, welcher in bekannter Weise zur Detektion einer Unfallsituation und zur Ansteuerung des Airbag verwendet wird.

Nachteilhafterweise wird jedoch auch bei dieser vorgeschlagenen Lösung weder die Insassenvorverlagerung infolge eines Fahrzeugaufpralls noch die Crash-Intensität bei der Gurtkraftbegrenzung weiter berücksichtigt, so daß gegebenenfalls auch bei schweren Unfällen eine Reduzierung der Rückhaltekraft des Gurtes erfolgt, obwohl der Airbag die seitens des Gurtes reduzierte Rückhaltekraft nicht ausreichend kompensieren kann.

Weitere Insassenrückhaltesysteme mit Gurtkraftbegrenzer, welche in Abhängigkeit unterschiedlicher Parameter arbeiten, sind aus der DE 195 20 721 A1 und der EP 0 893 313 A2 bekannt. Jedoch bietet die jeweils gewählte Auswahl von Parametern, nach denen eine Begrenzung der Rückhaltekraft durch den Sicherheitsgurt vorgenommen wird, keine Möglichkeit, die Rückhaltekraft in einer den tatsächlichen Bedingungen bei einem Fahrzeugaufprall angemessenen Weise zu steuern.

Ausgehend von diesem bekannten Stand der Technik liegt der vorliegenden Erfindung die Aufgabe zugrunde, ein Insassenrückhaltesystem mit Begrenzung der über einen Gurt auf einen Insassen ausgeübten Rückhaltekraft bereitzustellen, mittels dem es möglich ist, die Belastungen bei einem Unfall auf den Insassen auf ein Minimum weiter zu reduzieren, jedoch gleichzeitig auch die Rückhaltekraft auf ein erforderliches Maß einzustellen.

Diese Aufgabe wird durch die kennzeichnenden Merkmale des Patentanspruchs 1 gelöst.

Mit der erfindungsgemäßen Lösung wird ein Insassenrückhaltesystem mit Begrenzung der über einen Gurt auf Insassen ausgeübten Rückhaltekraft bereitgestellt, wobei abhängig von einer Aufblaszeit eines Airbags, von einem Insassengewicht, einem Crash-Niveau und einer Insassenvorverlagerung von einem relativ höheren auf ein relativ niedrigeres. Rückhaltekraftniveau geschaltet werden kann, wenn eine Aktivierung eines Gurtkraftbegrenzers erfolgt.

Dadurch, daß die Aktivierung des Gurtkraftbegrenzers nur nach Erreichen einer vorgegebenen Insassenvorverlagerung erfolgt, kann erreicht werden, daß die Begrenzung der Gurtkraft auch nur dann aktiviert wird, wenn tatsächlich eine relativ hohe Insassenvorverlagerung stattgefunden hat.

Dadurch, daß die Aktivierung des Gurtkraftbegrenzers auch nur nach einer Aufblaszeit des Airbags erfolgt, kann also in einer frühen Unfallphase die Kopplung des Insassen mit großer Gurtrückhaltekraft an das Fahrzeug erfolgen, während zu einem späteren Zeitpunkt im Bewegungsablauf der inzwischen gefüllte Airbag diese Aufgabe mit übernimmt. Hierzu ist es aber erforderlich, daß der Insasse überhaupt eine vorgegebene Insassenvorverlagerung erreicht hat und außerdem der Airbag auch vollständig aufgeblasen ist. Dadurch kann eine Kräfteüberhöhung am Insassen vermieden werden.

Weiterhin ist es wichtig, daß bei einer zu hohen Unfallschwere bzw. Crash-Intensität und/oder einem zu großen Insassengewicht keine Aktivierung des Gurtkraftbegrenzers erfolgt. In einem solchen Fall muß der Gurt weiterhin die Rückhaltefunktion übernehmen, da ansonsten eine optimale Sicherung des Insassen nicht gewährleistet werden. Der Insasse muß nämlich trotz einer schon erreichten Vorverlagerung und eines ausgelösten Airbags aufgrund des hohen Gewichtes und/oder der hohen Unfallschwere immer noch zurückgehalten werden.

Dabei wäre es sogar denkbar, daß die Rückhaltekraft bei einer sehr hohen Unfallschwere und/oder einem sehr hohen Insassengewicht nicht nur nicht begrenzt wird, sondern unter Umständen sogar erhöht wird.

Um also bei einem Unfall eine Kräfteüberhöhung zu vermeiden, wird die Gurtkraft zurückgeschaltet, wenn nicht das Gewicht des Insassen und/oder die Unfallschwere zu hoch sind und ein Zurückschalten der Gurtkraft nicht zu Vorteilen führt. Dadurch können vorteilhafterweise Kräfteüberhöhungen am Insassen vermieden werden und so insbesondere kleinere Unfälle beim Insassen geringere unerwünschte Beeinträchtigungen zur Folge haben.

Zu beachten ist dabei allgemein, daß hier unter Unfall bzw. Crash nicht immer eine tatsächliche Verunfallung des Fahrzeuges zu verstehen ist, sondern unter "Unfall" sind auch alle sonstigen kritischen Fahrzustände zu verstehen, wie zum Beispiel auch sehr starkes Abbremsen oder Schleudern.

Weitere Vorteile, vorteilhafte Ausgestaltungen und Weiterbildungen der Erfindung ergeben sich aus den Unteransprüchen und den im folgenden anhand der Zeichnung erläuterten Ausführungsbeispielen.

Es zeigt hierbei:
- Fig. 1: die verschiedenen bei einem erfindungsgemäßen Insassenrückhaltesystem gemäß einer bevorzugten Ausführungsform verwendeten Größen in einem gemeinsamen Diagramm; und
- Fig. 2: ein Flußdiagramm, das die Funktionsweise einer bevorzugten Ausführungsform des erfindungsgemäßen Insassenrückhaltesystems zeigt.

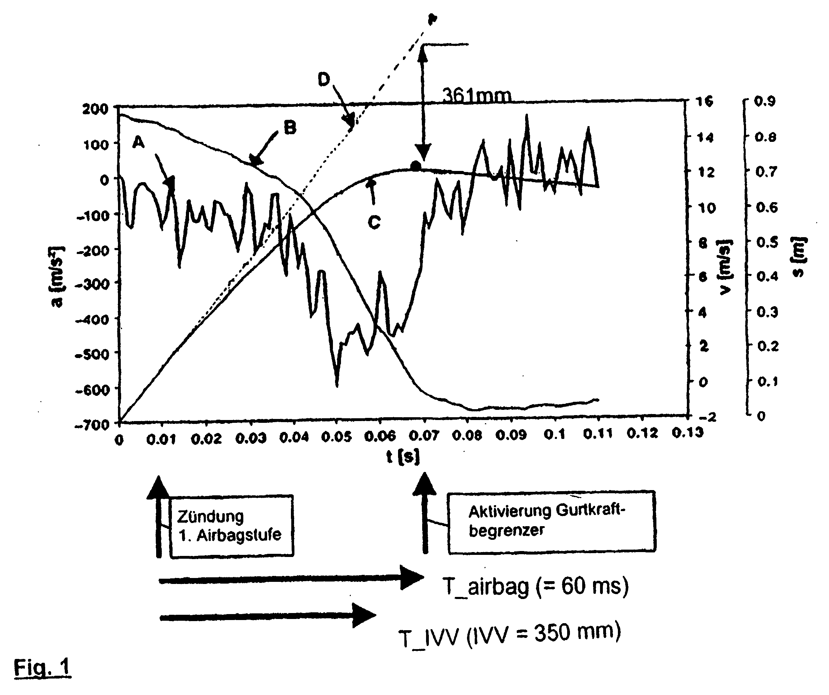

In Fig. 1 ist ein Diagramm dargestellt, in dem durch eine unregelmäßige Kurve A ein Unfallhergang dargestellt ist, und zwar genauer gesagt die Beschleunigung a eines Fahrzeuges bei einem Unfall über der Zeit t.

Eine Kurve B stellt die 1. Integration der Kurve A der Beschleunigung über der Zeit t dar, also ∫ a(t) dt. Das heißt, daß durch die Kurve B die Geschwindigkeit v und im vorliegenden Fall die Abnahme der Geschwindigkeit v des verunfallenden Fahrzeuges über der Zeit t dargestellt ist.

Eine dritte Kurve C entspricht der 2. Integration über der Kurve A, d.h. ∫∫ a(t) dt, und somit dem zurückgelegten Weg s des verunfallenden Fahrzeuges wiederum über der Zeit t.

Eine gestrichelt dargestellte Gerade, die in der Fig. 1 mit D bezeichnet ist, stellt den Weg s der freifliegenden Masse über der zeit t und daher den Weg s des Insassen selbst in dem verunfallenden Fahrzeug dar.

Bei einem erfindungsgemäßen Insassenrückhaltesystem findet abhängig von einer Airbagauslösung, einem Insassengewicht, einer Unfallschwere und einer Insassenvorverlagerung eine Aktivierung eines Gurtkraftbegrenzers statt, wobei die Aktivierung des Gurtkraftbegrenzers nur nach Erreichen einer vorgegebenen Insassenvorverlagerung und nur nach einer Aufblaszeit des Airbags erfolgt. Jedoch soll bei einer zu hohen Crash-Intensität und/oder zu großem Insassengewicht keine Aktivierung des Gurtkraftbegrenzers erfolgen.

Die Insassenvorverlagerung IVV, also die relative Bewegung des Insassen zum Fahrzeug bei einem Unfall, entspricht in der Fig. 1 der Differenz der Kurve D, die den Weg des Insassen selbst wiedergibt, zu der Kurve C, die den zurückgelegten Weg des Fahrzeuges, in dem sich der Insasse befindet, darstellt.

Das Aktivieren des Gurtkraftbegrenzers erfolgt gemäß der vorliegenden Erfindung nach Überschreiten einer vorgegebenen Insassenvorverlagerung. Bei dem beschriebenen Insassenrückhaltesystem hat es sich als besonders vorteilhaft erwiesen, wenn die vorgegebene Insassenvorverlagerung IVV derart gewählt wird, daß sie im Bereich von 250 mm bis 400 mm liegt. Nach einer solchen Insassenvorverlagerung kommt der Insasse dann in die Nähe des aufgeblasenen Airbags, der dann auch das Zurückhalten des Insassen unterstützen kann.

Gemäß Fig. 1 wurde beispielsweise eine vorgegebene Insassenvorverlagerung von 350 mm gewählt. Ein Pfeil T_IVV in Fig. 1 stellt die Zeit t dar, bei der die vorgegebene Insassenvorverlagerung IVV den vorgegebenen Wert von 350 mm erreicht hat.

Die Aktivierung des Gurtkraftbegrenzers erfolgt aber auch nur nach abgelaufener Aufblaszeit T_airbag des Airbags. Dabei ist die Aufblaszeit T_airbag gemäß der beschriebenen Ausführungsform eine vorbestimmte Größe, die vorher durch Versuche als ein Mittelwert bestimmt wird. Gemäß einer bevorzugten Ausführungsform der vorliegenden Erfindung soll die Aufblaszeit des Airbags derart gewählt werden, daß sie im Bereich von 40 ms bis 70 ms liegt. In Fig. 1 wurde beispielhaft eine Zeit von 60 ms gewählt.

Es wäre aber auch denkbar, daß hierfür Messungen vorgesehen sind, die die tatsächliche Aufblaszeit messen, so daß jeweils die tatsächliche Aufblaszeit verwendet wird.

Allgemein soll die Aktivierung des Gurtkraftbegrenzers nur erfolgen, wenn vorher tatsächlich eine erste Airbagstufe des Airbags ausgelöst wurde.

Bei dem in Fig. 1 dargestellten Unfallablauf soll nun der Gurtkraftbegrenzer nach Erreichen der vorgegebenen Insassenvorverlagerung IVV und nach einer Aufblaszeit T_airbag des Airbags aktiviert werden.

Als Zählerstart für die beiden vorgegebenen zu erreichenden Werte soll gemäß der gezeigten bevorzugten Ausführungsform jeweils die Zündung der ersten Airbagstufe dienen.

Ab diesem Zeitpunkt läuft nun die Zeit bis zum Erreichen der vorgegebenen Insassenvorverlagerung, die in Fig. 1, wie schon ausgeführt wurde, durch den Pfeil T_IVV dargestellt ist. Bei diesem gezeigten Beispiel ist aber zum Zeitpunkt, zu dem die vorgegebene Insassenvorverlagerung IVV erreicht ist, die vorgegebene Zeit zum Aufblasen des Airbags T_airbag, nämlich 60 ms ab Zündung der ersten Airbagstufe, noch nicht erreicht. Das heißt, daß der Gurtkraftbegrenzer nach Ablauf der Aufblaszeit T_airbag für den Airbag, die hier mit 60 ms die längere Zeit ist, aktiviert wird.

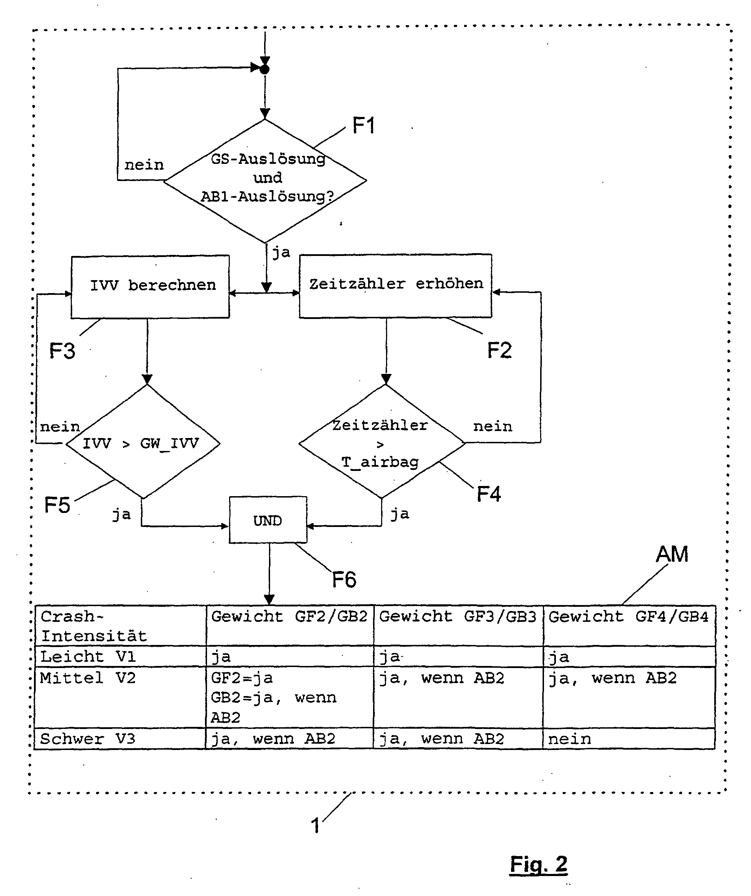

In Fig. 2 ist ein Flußdiagramm gezeigt, in dem die Funktionsweise einer besonders bevorzugten Ausführungsform des erfindungsgemäßen Insassenrückhaltesystems gezeigt ist, wobei der Gurt zusätzlich auch noch einen Gurtstraffer aufweist.

Der in Fig. 2 gezeigte Ablauf gibt vereinfacht ein Programmodul wieder, das in einem nur symbolisch angeordneten Auslösesteuergerät 1 abläuft. Darin wird zuerst in einer Funktion F1 überprüft, ob eine Auslösung der ersten Airbagstufe AB1 erfolgt ist und ob auch der Gurtstraffer GS ausgelöst wurde.

Werden der Gurtstraffer GS und die erste Airbagstufe AB1 in der Funktion F1 als ausgelöst erkannt, beginnt mit der Auslösung der ersten Airbagstufe in einer nachfolgenden Verarbeitungsfunktion F2 die Zeitzählung, ab der die Insassenvorverlagerung T_IVV und die Airbagaufblaszeit T_airbag berechnet werden.

Parallel wird in einer Funktion F3 die Insassenvorverlagerung IVV beispielsweise über die Messung des Gurtbandauszuges bestimmt. Gemäß der gezeigten bevorzugten Ausführungsform der Erfindung wird aber die Insassenvorverlagerung über eine zweifache Integration eines Beschleunigungssignals, wie es auch schon Fig. 1 dargestellt wurde, bestimmt.

Nach dem Start des Zeitzählers wird dann in einer Unterscheidungsfunktion F4 überprüft, ob die Airbagaufblaszeit T_airbag überschritten wurde. Diese Zeitzählung und Überprüfung findet solange statt bis die Aufblaszeit überschritten ist.

Gleichzeitig wird in einer Unterscheidungsfunktion F5 überprüft, ob die Vorverlagerung des Fahrzeuginsassen den vorgegebenen Grenzwert GW_IVV überschritten hat. Auch diese Überprüfung findet solange statt, bis dieser vorgegebene Schwellenwert überschritten wurde.

Erst wenn beide Grenzwerte in einer Funktion F6 als überschritten erkannt werden, wird zu einer sogenannten Aktivierungsmatrix AM verzweigt, die dazu dient, daß auch das Insassengewicht und die Unfallschwere bei der Aktivierung des Gurtkraftbegrenzers berücksichtigt wird. Die Aktivierungsmatrix AM enthält dabei vorgegebene, gespeicherte Werte für eine zu hohe Crash-Intensität und/oder zu hohes Insassengewicht, bei denen keine Aktivierung des Gurtkraftbegrenzers erfolgt.

Die Crash-Intensität kann dabei beispielsweise über die Annäherungsgeschwindigkeit (closing velocity, cv) oder auch andere Sensoren, die unter Umständen sowieso schon im Fahrzeug vorhanden sind (z.B. Upfront-Sensoren, Deformationssensoren oder Zentral-Auslösesteurgerät mit integriertem Beschleunigungssensor), ermittelt werden. Das Gewicht des Insassen kann beispielsweise über im Fahrzeugsitz enthaltene Sensoren ermittelt werden.

Die in der Fig. 2 dargestellte Aktivierungsmatrix AM enthält nun in diesem gezeigten Ausführungsbeispiel des erfindungsgemäßen Verfahrens drei unterschiedliche Crash-Intensitäten V1 ≡ leicht (≅ < 30 km/h), V2 ≡ mittel (≅ 30 - 50 km/h) und V3 ≡ schwer (≅ > 50 km/h).

Weiterhin sind drei unterschiedliche Insassengewichtsklassen angegeben. In der in Fig. 2 angegebenen Aktivierungsmatrix AM wird dabei auch noch jeweils zwischen dem Gewicht des Fahrers GF2, GF3, GF4 und des Beifahrers GB2, GB3, GB4 unterschieden.

GF2 und GB2 stehen dabei für ein Insassengewicht von 35 kg bis 60 kg, GF3 und GB3 für 60 kg bis 90 kg und GF4 und GB4 für ein Insassengewicht von über 90 kg.

Die Aktivierungsmatrix AM gibt nun an, wann der Gurtkraftbegrenzer nach Überschreiten der Insassenvorverlagerung und der Airbagaufblaszeit tatsächlich aktiviert wird und zwar zuerst einmal abhängig von der Crash-Intensität und dem Insassengewicht. Eine Aktivierung des Gurtkraftbegrenzers ist in der Matrix AM mit "ja" wiedergegeben, falls die Aktivierung unterbleibt, ist dies in der Matrix mit "nein" bezeichnet.

Bei einem leichten Unfall V1 wird im allgemeinen eine Aktivierung des Gurtkraftbegrenzers erfolgen, sowie auch bei einem mittelschweren Unfall V2 bei einem Fahrer der Gewichtsklasse GF2 von 35 bis 60 kg.

Keine Aktivierung des Gurtkraftbegrenzers erfolgt bei einem schweren Unfall bei einem Insassengewicht der Klasse GF4/GB4 von über 90 kg.

Bei einem mittelschweren Unfall V2 und einem Insassengewicht GB2, GF3/GB3 bzw. GF4/GB4 und bei einem schweren Unfall V3 und einem Insassengewicht GF2/GB2 und GF3/GB3 erfolgt die Aktivierung des Gurtkraftbegrenzers nur, wenn auch die Auslösung einer zweiten Airbagstufe AB2 erfolgt ist.

Hierfür ist dann Voraussetzung, daß mindestens zweistufige Airbags verwendet werden, d.h., daß nochmals eine Zündung stattfindet, wenn der Insasse auf das Airbagkissen aufgeprallt ist und nochmals Gas in den Airbag gefüllt wird.

Wird kein zweistufiger Airbag verwendet oder wird die zweite Airbagstufe nicht ausgelöst, so wird die Gurtkraft auch nicht begrenzt.

Bei einem leichten Insassengewicht von GF2/GB2 und einem mittelschweren Unfall V2 wird gemäß der gezeigten bevorzugten Ausführungsform auch noch zwischen dem Fahrer und dem Beifahrer unterschieden, da wie aus der Aktivierungsmatrix AM zu entnehmen ist, für den Fahrer eine Aktivierung des Gurtkraftbegrenzers erfolgt, während sie für den Beifahrer nur erfolgt, wenn auch die zweite Airbagstufe AB2 ausgelöst wurde.

Der Grund hierfür liegt darin, daß gemäß der gezeigten bevorzugten Ausführungsform davon ausgegangen wurde, daß dem Fahrer ein sogenannter 80/20 Airbag zugeordnet ist. Das heißt, daß in der ersten Airbagstufe 80 % des Gasvolumens und in der zweiten Airbagstufe nur noch 20 % des Gasvolumens in den Gassack strömen, während dem Beifahrer ein sogenannter 50/50 Airbag zugeordnet ist, das heißt in der ersten und der zweiten Airbagstufe jeweils 50 % des Gasvolumens in den Gassack strömen.

Aus diesem Grund findet bei einem Insassengewicht von F2 bzw. B2 und einer Unfallschwere V2 beim Fahrer eine Gurtkraftbegrenzung immer statt, während sie beim Beifahrer nur stattfindet, wenn die zweite Airbagstufe gezündet wurde, da erst dann durch den Airbag genügend Kraft abgefangen werden kann.

Findet nun eine Aktivierung des Gurtkraftbegrenzers statt, dann kann die Gurtkraftbegrenzung beispielsweise stufenweise erfolgen. Das heißt von einem hohen Wert (z.B. etwa 4 kN) auf einen niedrigeren Wert (z.B. etwa 2 kN) heruntergeschaltet werden.

Daneben wäre es aber auch denkbar, daß die Gurtkraftbegrenzung kontinuierlich etwa in Form einer Parabel erfolgt.

In den Figuren sind die gemäß der beschriebenen bevorzugten Ausführungsform vorgegebenen Schwellen alles Grenzwerte. Dies sind hierbei die vorgegebene Aufblaszeit für den Airbag T_airbag, die vorgegebene Insassenvorverlagerung IVV und die Aktivierungsmatrix AM. Diese Parameter können dabei beispielsweise auf einem nichtflüchtigen Speicher gespeichert sein, der aber durchaus auch überschrieben werden kann, um gegebenenfalls bestimmte Parameter zu ändern und auch hinzuzufügen. Ebenso können die Schwellen abweichend als Schwellbereiche definiert werden.

Da nicht alle Insassen immer ein identisches Gewicht aufweisen und sich auch in unterschiedlichen Positionen befinden können, hat es sich zudem als besonders vorteilhaft gezeigt, wenn die Aktivierung des Gurtkraftbegrenzers bei jedem Fahrzeugsitz getrennt erfolgt.

## Patentansprüche

1. Insassenrückhaltesystem mit einem Airbag und einem Gurt zur Ausübung einer Rückhaltekraft auf einen Insassen und mit einem Gurtkraftbegrenzer zur Begrenzung der über den Gurt auf den Insassen ausgeübten Rückhaltekraft, wobei die Rückhaltekraft durch den Gurtkraftbegrenzer in Abhängigkeit von vordefinierten Parametern von einem relativ höheren auf ein relativ niedrigeres Rückhaltekraftniveau schaltbar ist,
**dadurch gekennzeichnet,**
**daß** eine Aktivierung des Gurtkraftbegrenzers nur dann erfolgt, wenn
- eine Auslösung des Airbags erkannt ist, und
- eine vorgegebene Insassenvorverlagerung erreicht ist, und
- eine vordefinierte Aufblaszeit des Airbags abgelaufen ist, und
- in einer Aktivierungsmatrix ein der vorliegenden Crash-Intensität und dem vorliegenden Insassengewicht zugeordnetes Feld eine Aktivierung des Gurtkraftbegrenzers vorsieht, wobei die Aktivierungsmatrix derart ausgelegt ist, daß eine Aktivierung des Gurtkraftbegrenzers unterbleibt, wenn die Crash-Intensität und/oder das Insassengewicht größer einer vordefinierten Schwelle sind.

2. Insassenrückhaltesystem nach Anspruch 1,
**dadurch gekennzeichnet,**
**daß** die vordefinierte Aufblaszeit des Airbags in einem Bereich von 45 ms bis 65 ms liegt.

3. Insassenrückhaltesystem nach Anspruch 1 oder 2,
**dadurch gekennzeichnet,**
**daß** die vorgegebene Insassenvorverlagerung in einem Bereich von 250 mm bis 400 mm liegt.

4. Verfahren nach einem der Ansprüche 1 bis 3,
**dadurch gekennzeichnet,**
**daß** die vorgegebene Insassenvorverlagerung über einen Gurtbandauszug bestimmt wird.

5. Insassenrückhaltesystem nach einem der Ansprüche 1 bis 4,
**dadurch gekennzeichnet,**
**daß** die vorgegebene Insassenvorverlagerung über eine zweifache Integration eines Beschleunigungssignals bestimmt wird.

6. Insassenrückhaltesystem nach einem der Ansprüche 1 bis 5,
**dadurch gekennzeichnet,**
**daß** die Aktivierung des Gurtkraftbegrenzers nur bei Auslösung einer ersten Airbagstufe des Airbags erfolgt.

7. Insassenrückhaltesystem nach einem der Ansprüche 1 bis 6,
**dadurch gekennzeichnet,**
**daß** der Gurt einen Gurtstraffer aufweist.

8. Insassenrückhaltesystem nach Anspruch 7,
**dadurch gekennzeichnet,**
**daß** die Aktivierung des Gurtkraftbegrenzers nur bei vorheriger Auslösung des Gurtstraffers erfolgt.

9. Insassenrückhaltesystem nach einem der Ansprüche 1 bis 8,
**dadurch gekennzeichnet,**
**daß** die Gurtkraftbegrenzung stufenweise erfolgt.

10. Insassenrückhaltesystem nach einem der Ansprüche 1 bis 8,
**dadurch gekennzeichnet,**
**daß** die Gurtkraftbegrenzung kontinuierlich erfolgt.

11. Insassenrückhaltesystem nach einem der Ansprüche 1 bis 10,
**dadurch gekennzeichnet,**
**daß** die Aktivierung des Gurtkraftbegrenzers bei jedem Fahrzeugsitz getrennt erfolgt.

## Claims

1. Occupant restraining system comprising an airbag and a belt for exerting a restraining force on an occupant and comprising a belt force limiter for limiting the restraining force exerted by the belt on the occupant, wherein the restraining force can be switched from a relatively higher to a relatively lower restraining force level by the belt force limiter as a function of predefined parameters, **characterised in that** the belt force limiter is only activated, when
- a triggering of the airbag is detected, and
- a predetermined forward displacement of the occupant has been reached, and,
- a predetermined inflation time of the airbag has expired, and
- a field associated with the present crash intensity and the present occupant's weight in an activation matrix provides activation of the belt force limiter, the activation matrix being designed in such a way that activation of the belt force limiter does not occur when the crash intensity and/or the occupant's weight is greater than a predefined threshold.

2. Occupant restraining system according to claim 1, **characterised in that** the predefined inflation time of the airbag is in a range from 45 ms to 65 ms.

3. Occupant restraining system according to claim 1 or 2, **characterised in that** the predetermined forward displacement of the occupant is in a range from 250 mm to 400 mm.

4. Method according to any one of claims 1 to 3, **characterised in that** the predetermined forward displacement of the occupant is determined by belt webbing extension.

5. Occupant restraining system according to any one of claims 1 to 4, **characterised in that** the predetermined forward displacement of the occupant is determined via a two-fold integration of an acceleration signal.

6. Occupant restraining system according to any one of claims 1 to 5, **characterised in that** the belt force limiter is only activated upon triggering of a first airbag stage of the airbag.

7. Occupant restraining system according to any one of claims 1 to 6, **characterised in that** the belt has a belt tensioner.

8. Occupant restraining system according to claim 7, **characterised in that** the belt force limiter is only activated upon previous triggering of the belt tensioner.

9. Occupant restraining system according to any one of claims 1 to 8, **characterised in that** the belt force limitation takes place in stages.

10. Occupant restraining system according to any one of claims 1 to 8, **characterised in that** the belt force limitation takes place continuously.

11. Occupant restraining system according to any one of claims 1 to 10, **characterised in that** the belt force limiter is activated separately for each vehicle seat.

## Revendications

1. Système de retenue de passager avec un airbag et une ceinture permettant d'exercer une force de retenue sur un passager, et avec un limiteur de force de la ceinture limitant la force de retenue exercée sur le passager par la ceinture, moyennant quoi la force de retenue peut, grâce à un limiteur de force de ceinture en fonction de paramètres prédéfinis, être permutée d'un niveau relativement élevé à un niveau relativement bas, **caractérisé en ce qu'**une activation du limiteur de la force de la ceinture n'a lieu que si
- un déclenchement de l'airbag est identifié, et
- un pré-transfert prédéfini du passager est atteint, et
- une durée de gonflage prédéfinie de l'airbag s'est écoulée, et
- dans une matrice d'activation, un champ subordonné à l'intensité du choc existante et au poids existant du passager prévoit une activation du limiteur de la force de la ceinture, moyennant quoi la matrice d'activation est conçue de telle sorte que le limiteur de la force de la ceinture n'est pas activé si l'intensité du choc et/ou le poids du passager sont supérieurs au seuil prédéfini.

2. Système de retenue de passager selon la revendication 1, **caractérisé en ce que** la durée de gonflage prédéfinie de l'airbag se situe dans une plage comprise entre 45 ms et 65 ms.

3. Système de retenue de passager selon la revendication 1 ou 2, **caractérisé en ce que** le pré-transfert prédéfini du passager se situe dans un intervalle compris entre 250 mm et 400 mm.

4. Procédé selon l'une quelconque des revendications 1 à 3, **caractérisé en ce que** le pré-transfert prédéfini du passager est défini par une rallonge de la sangle de ceinture.

5. Système de retenue de passager selon l'une quelconque des revendications 1 à 4, **caractérisé en ce que** le pré-transfert prédéfini du passager est déterminé par une double intégration d'un signal d'accélération.

6. Système de retenue de passager selon l'une quelconque des revendications 1 à 5, **caractérisé en ce que** l'activation du limiteur de la force de la ceinture ne se produit que lors du déclenchement du premier niveau de l'airbag.

7. Système de retenue de passager selon l'une quelconque des revendications 1 à 6, **caractérisé en ce que** la ceinture possède un tenseur de ceinture.

8. Système de retenue de passager selon la revendication 7, **caractérisé en ce que** l'activation du limiteur de la force de la ceinture ne se produit qu'en cas de déclenchement préalable du tenseur de ceinture.

9. Système de retenue de passager selon l'une quelconque des revendications 1 à 8, **caractérisé en ce que** la limitation de la force de la ceinture se produit par paliers.

10. Système de retenue de passager selon l'une quelconque des revendications 1 à 8, **caractérisé en ce que** la limitation de la force de la ceinture se produit en continu.

11. Système de retenue de passager selon l'une quelconque des revendications 1 à 10, **caractérisé en ce que** l'activation du limiteur de la force de la ceinture a lieu séparément pour chaque siège du véhicule.
